# EUROPEAN PATENT APPLICATION

(11) **EP 1 757 510 A1**
(43) Date of publication of application: **28.02.2007**
(21) Application number: 06017525.4
(22) Date of filing: 23.08.2006
(51) Int. Cl.: B62D 3/12

(54) **Friction welded rack and pinion steering apparatus and method**

(30) Priority: 23.08.2005 US 710190 P; 22.08.2006 US 507440
(71) Applicant: SPX CORPORATION, Charlotte, NC 28277 (US)
(72) Inventor: Helman, Ken, Huntersville NC 28078 (US); Bartalone, Tony, Okemos MI 48864 (US); Wolf, Ken, Chesterfield MI 48047 (US)
(74) Representative: Lang, Friedrich

(57) **Abstract**

A steering rack (18) is provided wherein the various components (32,50,36) can be friction welded together. The various components can be of various shapes that include a tube portion friction welded to another tube portion having gear racks thereon. The tubes may have various shapes and may include slots therein. The components may also be welded together using inertia welding.

## Description

### CROSS-REFERENCE TO RELATED APPLICATIONS

This application claims priority to provisional patent application entitled, FRICTION WELDED RACK AND PINION STEERING APPARATUS AND METHOD, filed August 23, 2005, having a serial number of 60/710,190, pending, the disclosure of which is hereby incorporated by reference in its entirety.

### FIELD OF THE INVENTION

This invention relates to steering systems for vehicles. More particularly, this invention relates to a rack and pinion steering gear apparatus and method.

### BACKGROUND OF THE INVENTION

Automotive vehicles are equipped with a pair of front wheels that are steered to enable the vehicle to turn left or right. Steering is achieved by generating linear motion of a rack and pinion assembly whereby the pinion is rotated by a steering wheel and engages the rack which causes rotation of the wheels via tie-rods. The steering wheel is mounted on a steering shaft which in turn is connected to the steering gear which is connected via a steering linkage to one or more vehicle wheels.

A pinion housing is affixed to the lower steering shaft and engages the rack within the rack housing. Rotation of the lower shaft causes rotation of the pinion and therefore linear movement of the rack within the rack housing. The tie-rods connected to the rack allow the wheels to be steered. Thus, the pinion displaces the rack when a steering wheel joined to the steering column is turned. When the steering wheel is turned, the pinion turns and because the pinion is meshed with the teeth of the rack, the rack is translated, producing the desired turn of the vehicle.

It can thus be seen the importance of the rack and pinion steering gear to the entire automotive industry. In an effort to reduce costs, there exists a need to produce a low cost rack and pinion steering gear. There is also a need for modularity of parts in production whereby multiple rack designs can be produced from the same equipment.

Conventionally, manufacturers must manufacture a differentrack and pinion gear for different types of automobiles based on the vehicles' requirements and performance criteria. This is disadvantageous in that there is greater lead time due to the engineering involved in designing each rack and pinion gear per its particular requirement. Also, each of the components must then be specifically manufactured, which leads to increased cost.

While the foregoing system is useful, improvements are still desirable. For example, the existing systems may require a great deal of engineering. For each type of need or performance requirement, research may need to be conducted to determine which sort of rack and pinion gear is required to fulfill that need. Moreover, the various components need to be manufactured, which sometimes takes a considerable amount of time.

It is therefore desirable to have the ability to service the automobile industry efficiently, meeting their needs in a timely, yet cost effective manner. It is beneficial that when various types of rack and pinion gears are required, a great deal of time need not be spent on designing a specific type of rack and pinion steering to fit the needs of that customer. Accordingly, it is desirable to provide a method and apparatus that increases the efficiency of producing a variety of rack and pinion steering components while reducing costs.

### SUMMARY OF THE INVENTION

The foregoing needs are met, to a great extent, by the present invention, wherein in one aspect an apparatus is provided that in some embodiments combines various subcomponents of racks and pinions to produce rack and pinion steering systems in an efficient manner.

In accordance with one embodiment of the present invention, a steering rack is provided and can include a tubular bar having a first end and a second end, an inlet at the first end, an outlet spaced radially on the tubular bar at an axial distance from the second end, and a solid bar coupled to the second end of the tubular bar.

In accordance with another embodiment of the present invention, a steering rack is provided and can include a tubular bar having a first end and a second end, a threaded coupler attached to the first end, and a slotted rack attached to the second end, wherein the tubular bar is attached to the slotted rack by friction welding.

In accordance with yet another embodiment of the present invention, a method of forming a steering rack is provided and can include forming a tubular bar having a first end and a second end, friction welding a threaded coupler to a first end, and friction welding a slotted rack to the second end.

In accordance with still another embodiment of the present invention, a system of forming a steering rack is provided and can include means for forming a tubular bar having a first end and a second end, means for friction welding a threaded coupler to a first end, and means for friction welding a slotted rack to the second end.

There has thus been outlined, rather broadly, certain embodiments of the invention in order that the detailed description thereof herein may be better understood, and in order that the present contribution to the art may be better appreciated. There are, of course, additional embodiments of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

### BRIEF DESCRIPTION OF THE DRAWINGS

FIG. 1 is an illustration of an automobile's steering system.

FIG. 2 is an illustration of an automobile rack according to an embodiment of the present invention.

FIG. 3 is an illustration of an automobile rack according to the prior art.

FIG. 4 is an illustration of the various cross sections of a rack toothed section of an embodiment of the invention of FIG. 2.

FIG. 5 illustrates still another embodiment of the present invention.

FIG. 6 illustrates in greater detail the embodiment shown in FIG. 5.

### DETAILED DESCRIPTION

The foregoing needs are met, to a great extent, by the present invention, wherein in one aspect an apparatus is provided that in some embodiments combines various subcomponents of racks and pinions to produce rack and pinion steering systems in an efficient manner. There are, of course, additional embodiments of the invention that will be described below and which will form the subject matter of the claims appended hereto.

The invention will now be described with reference to the drawing figures, in which like reference numerals refer to like parts throughout. An embodiment in accordance with the present invention provides a friction welded rack and pinion steering gear.

FTG. 1 is an illustration of an automobile's steering system 10. A steering wheel 12 that a driver turns is coupled to a steering shaft 14 that has a pinion 16 attached at the distal end of the steering shaft 14. The pinion 16 with ts pinion teeth 20 engages the rack teeth 22 of the rack 18. As the steering wheel 12 turns clockwise or counter clockwise, the pinion 16 also correspondingly rotates and translates the rack 18. The rack 18 couples to the automobile's wheel 30 through a tie rod 24 and a steering arm 26. A spindle 28 attaches to the wheel 30 and allows the wheel to rotate. The translating motion of the rack 18 moves the wheel 30 and allows the automobile to turn in a desired direction. Only one wheel is depicted for illustrative purposes. It is also contemplated by the invention that the steering mechanism can also be a worm gear driven by an electric motor. The worm gear with the electric motor can laterally move the rack 18.

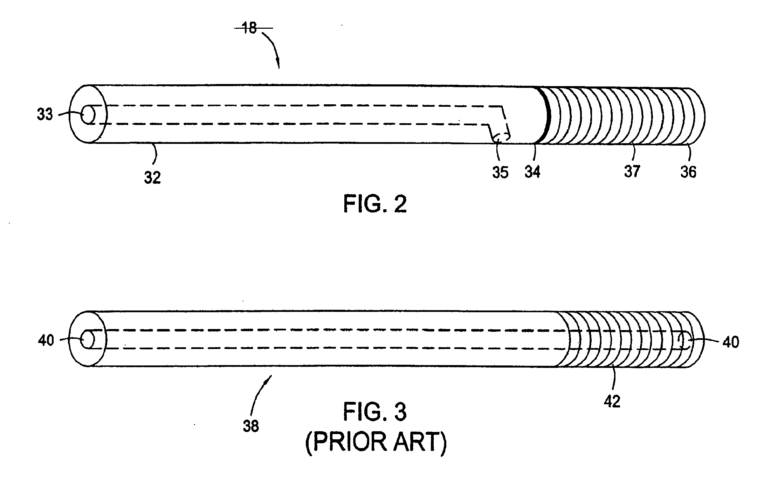

FIG. 2 is an illustration of an automobile rack 18 according to an embodiment of the present invention. The subcomponents include a round tube section 32 that may be solid or tubular and a rack toothed section 36 that may be a "Y" shaped bar or round shaped bar. Moreover, the rack toothed section 36 is configured with teeth 37. These two subcomponents 32, 36 attach to each other at the weld junction 34 through the use of welding, for example, friction welding. Because the subcomponents may be friction welded together to complete a finished rack 18, multiple combinations are possible. The design thus becomes modular with the potential for multiple designs for finished racks produced from the same manufacturing equipment. Further, subcomponents of various shapes may be welded together and the round tube section 32 can be located on either side of the rack toothed section 36. If the gear worm is used to steer the vehicle, the gear worm can be welded or coupled to a portion of the rack so that the worm gear can translate the rack.

Further, the round tube section 32 may be configured with an opening 33 at one end to permit the passage of air within the round tube section 32 as the rack 18 is translated. The air may exit the round tube section 32 at another opening 35 formed on a side of the round tube section 32. In this manner, tubular bar may be used for the round tube section 32. The rack tooth section 36 may be solid. The "gun drilling" process (as explained below) is avoided and needless time and energy are saved.

FIG. 3 is an illustration of an automobile rack 38 according to the prior art. The rack 38 is generally of uniform construction and is solid. However, it may be necessary to drill out the center to allow for the passage of air within the rack 38. Air passes through the rack 38 from one end to the other, as the rack 38 is translated. A process known as "gun drilling" is an approach to fabricating a tubular bar from a solid bar. This process begins with a solid round bar and then drills out the center 40 to create a tubular bar. The drilling out of the center 40 is difficult and complex process that can be a time consuming and expensive endeavor. The teeth 42 are then formed on the rack 38. The embodiments of the present invention, therefore, save time and lower cost by avoiding the "gun drilling" process.

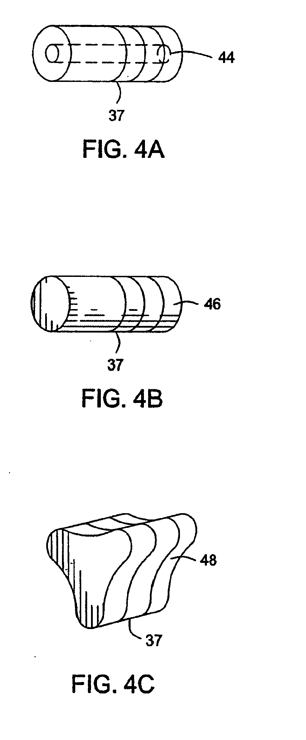

FIG. 4 is an illustration of the various cross sections of a rack toothed section 36 of an embodiment of the invention of FIG. 2. For example, FIG. 4a represents a tubular cross section, 44; FIG. 4b represents a solid cross section 46; and FIG. 4c represents a "Y" shaped cross section 48. Thus, many variations are possible and work in an equivalent manner.

An embodiment in accordance with the present invention provides a modular rack and pinion steering system. Some embodiments of the present invention relate to a modularized system for producing the steering system, whereby one can easily produce a variety of rack and pinion steering systems. Such ease greatly reduces cost, allows for low inventories and maximizes efficiency.

Embodiments of the present invention provide a method and apparatus that can easily accommodate different configurations of rack and pinion steering systems required for various makes of automobiles. This eliminates having to specifically design each steering system to accommodate a particular requirement, which may greatly reduce cost and lead time. Therefore, it is possible to have just a few sizes of racks and pinions in the inventory and combine them in an appropriate manner to achieve desired capabilities. Further, the manufacturer can have a greater inventory of replacement parts that can be used quickly, speeding up the repair process, making it easier to order and obtain replacement parts, greatly increasing efficiency.

The subcomponents of the rack are attached to each other by, for example, friction welding or inertia welding. However, other types of welding are contemplated and are within the scope of the present invention. Friction welding includes generating a frictional force between a tool and a work piece comprising one or more members where the materials of the members are plasticized, mixed, and cooled to form a friction weld joint. Components are often formed as assemblies of smaller structural members to form components that are large or too complicated to be formed by conventional manufacturing methods such as casting. Factors limiting the size and shape of the component to be manufactured are casting sizes, forging sizes, and available plate or block sizes.

Friction welding can be used to form strong joints without producing undesired results. Friction welding does not reduce the mechanical characteristics of the joined component, or cause significant dimensional changes to the component being welded. Friction welding provides strong and reliable weld joints and can be used with a variety of materials, such as steel, titanium, aluminum, and alloys.

Friction welding includes rotational and linear friction welding, for example. Rotational friction welding includes a rotary tool, such as a friction stir welding tool, which contains a rotatable shank and pin. As the shank and pin are rotated, the pin is urged into one of the structural members or between adjacent structural members. As the pin rotates, friction between the pin and the members heats the structural members and produces a plasticized region. The motion of the pin leads to a mixing of the materials of the structural members in the plasticized region. In linear friction welding, the friction welding tool is reciprocated rather than rotated. The pin translates through the structural members or along the interface to form a linear friction stir weld joint.

Inertia welding is part of the friction welding family in which the energy required to produce the weld is supplied primarily by the stored rotational kinetic energy of the welding machine. One of the pieces to be welded together is coupled to a flywheel while the other is restrained from rotating. The flywheel is then accelerated to a certain rotational speed and the rotational kinetic energy is stored. The motor is disengaged from the flywheel and the pieces are forced together by the friction welding force. This causes the surfaces of the pieces to meld together and the two pieces are welded together after the rotation of the flywheel is completed.

The teeth of the rack are formed by broaching. Broaching is a production process whereby a cutter, called a broach, is used to finish internal or external surfaces, such as holes of circular, square, or irregular sections, keyways, the teeth of internal gears, multiple spline holes and flat surfaces. During broaching, the action of the broach itself serves as a clamping medium so that in many cases the operation may be completed in the time ordinarily taken to chuck the piece. Broaching round holes gives greater accuracy and better finish than reaming but because the broach may be guided only by the work piece it is cutting, the hole may not be accurate with respect to previously machined surfaces. Where accuracy is required, it is better practice to broach first and then turn other surfaces with the work piece mounted on a mandrel. The broach is usually long and is provided with many teeth so graded in size that each takes a small chip when the tool is pulled or pushed through the previously prepared leader hole or past the surface.

"Push" broaching is performed on machines of the press type with a fixture for holding the work piece and broach or on presses operated by power. They are usually vertical and may be driven hydraulically or by screw, rack or crank. The "pull" type of broach may be either vertical or horizontal. The ram may be driven hydraulically or by screw, rack or crank.

The subcomponents of a preferred embodiment of the present invention are fabricated prior to this operation. It is possible to use a round bar or a "Y" shape bar for the rack toothed section and friction weld either of them to the other subcomponent round bar with heat. The "Y" bar is made using the closed form die where there is no actual open section. The "Y" form and the teeth are forged together in place. This "Y" bar is then friction welded to a round bar piece.

In another embodiment of the present invention the round tube section 32 may be formed in a variety of ways. One method of fabricating the round tube section 32 is through the use of seamless tubing. Seamless tubing involves extruding metal into a tube shape so that there is no welded seam. This method provides accurate dimensions, has minimal scrap, can be used with a broad range of chemistries and has a high strength-to-weight ratio.

Seamed tubing is made from sheets of metal that are wrapped into a cylinder or tubular shape. The edges of the sheet of metal are then joined together, usually by welding, at the abutment, forming a seam. The seam on the tube places loads differently than if the tube was made using the seamless method. However, the seamed tubing may be oriented in any way specified by the customer to control the loads and achieve certain desired advantages. Thus, the round tube section 32 may be formed using various techniques.

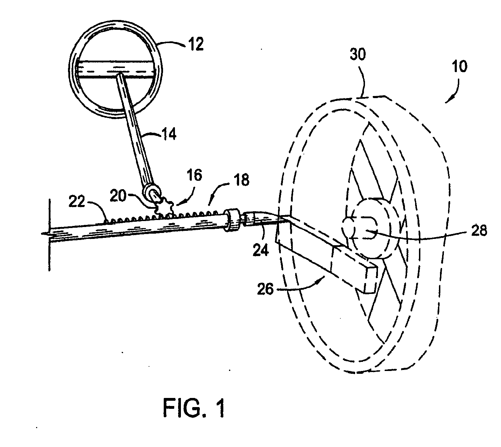

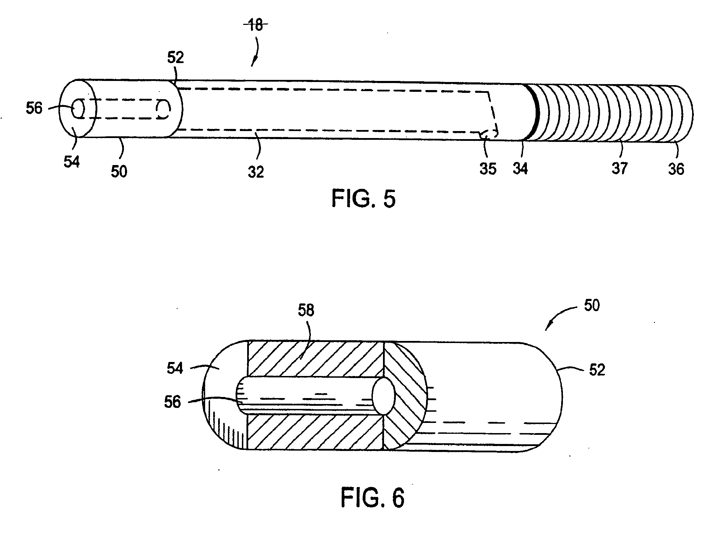

FIG. 5 illustrates still another embodiment of the present invention. In particular, the round tube section 32 may be attached to a threaded coupler 50 at the end opposite the rack toothed section 36, allowing the round tube section 32 to have greater flexibility. The threaded coupler 50 has a first end 52, a second end 54 and an aperture 56. The first end 52 is affixed to the round tube section 32, in any suitable manner, or through friction welding, and the second end 54 may be coupled to the inner tie rod 24 depicted in FIG. 1.

FIG. 6 illustrates the threaded coupler 50 in greater detail. Specifically, part of a cross section of the threaded coupler is shown and depicts threads 58 that are formed on the inside of the threaded coupler 50. Use of a threaded coupler 50 is beneficial because the round tube section 32 can have a particular inside diameter, allowing it to be light weight, thin, and permit greater air flow, while the threaded coupler 50 can have a different inside diameter, permitting a sturdy connection to the inner tie rod 24. Thus, the threaded coupler 50 and the round tube section 32 can have different inner diameters to achieve certain mechanical advantages, while allowing for sturdy connections to the inner tie rod 24. The outside diameter for both the round tube section 32 and the threaded coupler 50 may be substantially similar.

The many features and advantages of the invention are apparent from the detailed specification, and thus, it is intended by the appended claims to cover all such features and advantages of the invention which fall within the true spirit and scope of the invention. Further, since numerous modifications and variations will readily occur to those skilled in the art, it is not desired to limit the invention to the exact construction and operation illustrated and described, and accordingly, all suitable modifications and equivalents may be resorted to, falling within the scope of the invention.

## Claims

1. A steering rack, comprising:
a tubular bar having a first end and a second end;
an inlet at the first end;
an outlet spaced radially on the tubular bar at an axial distance from the second end; and
a solid bar coupled to the second end of the tubular bar.

2. The steering rack of claim 1, wherein the solid bar is coupled to the tubular bar by friction welding;

3. The steering rack of claim 1, wherein the solid bar further comprises a slot.

4. The steering rack of claim 3, wherein the slot is formed by broaching.

5. The steering rack of claim 1, wherein the tubular bar is configured to conduct air between the inlet and the outlet.

6. The steering rack of claim 1, wherein the solid bar has a circular configuration.

7. The steering rack of claim 1, wherein the solid bar has a Y configuration.

8. The steering rack of claim 1, further comprising a threaded coupler affixed to the tubular bar at the first end.

9. The steering rack of claim 8, wherein the threaded coupler has an aperture running the length of the threaded coupler.

10. A steering rack, comprising:
a tubular bar having a first end and a second end;
a threaded coupler attached to the first end; and
a slotted rack attached to the second end, wherein the tubular bar is attached to the slotted rack by friction welding.

11. The steering rack of claim 10, wherein the slotted rack comprises a slot formed by broaching.

12. The steering rack of claim 10, wherein the tubular bar is formed by seamed tubing.

13. The steering rack of claim 10, wherein the tubular bar is formed by seamless tubing.

14. The steering rack of claim 10, wherein the tubular bar has an inlet and an outlet, wherein the inlet is at a first end and the outlet is spaced radially on the tubular bar at an axial distance from the second end.

15. A method of forming a steering rack, comprising:
forming a tubular bar having a first end and a second end;
friction welding a threaded coupler to a first end; and
friction welding a slotted rack to the second end.

16. The method of claim 15, further comprising broaching a plurality of slots on the slotted rack.

17. The method of claim 15, further comprising forming a plurality of threads on the threaded coupler.

18. The method of claim 15, wherein the tubular bar is formed using seamed tubing.

19. The method of claim 15, wherein the tubular bar is formed using seamless tubing.

20. A system of forming a steering rack, comprising:
means for forming a tubular bar having a first end and a second end;
means for friction welding a threaded coupler to a first end; and
means for friction welding a slotted rack to the second end.

21. The system of claim 20, further comprising means for broaching a plurality of slots on the slotted rack.

22. The system of claim 20, further comprising means for forming a plurality of threads on the threaded coupler.

23. The system of claim 20, wherein the tubular bar is formed using seamed tubing.

24. The system of claim 20, wherein the tubular bar is formed using seamless tubing.
